(19) Europäisches Patentamt
European Patent Office
Office européen des brevets

(11) Veröffentlichungsnummer: **0 012 172**
**A1**

(12) # EUROPÄISCHE PATENTANMELDUNG

(21) Anmeldenummer: **79103918.3**

(22) Anmeldetag: **12.10.79**

(51) Int. Cl.³: **C 07 F 9/165**, A 01 N 57/14

(30) Priorität: **25.10.78 DE 2846437**

(43) Veröffentlichungstag der Anmeldung: **25.06.80 Patentblatt 80/13**

(84) Benannte Vertragsstaaten: **AT BE CH DE FR GB IT NL SE**

(71) Anmelder: **BAYER AG, Zentralbereich Patente, Marken und Lizenzen, D-5090 Leverkusen 1, Bayerwerk (DE)**

(72) Erfinder: **Förster, Heinz, Dr., Am Eckbusch 47, D-5600 Wuppertal 1 (DE)**
Erfinder: **Hofer, Wolfgang, Dr., Pahlkestrasse 59, D-5600 Wuppertal 1 (DE)**
Erfinder: **Eue, Ludwig, Dr., Paul-Klee-Strasse 36, D-5090 Leverkusen 1 (DE)**

(54) **O-thyl-S-n-propyl-dithiophosphoryloxy-essigsäure-N-methylanilid, Verfahren zu seiner Herstellung sowie seine Verwendung als Herbizid.**

(57) Die Erfindung betrifft das neue O-Äthyl-S-n-propyl-dithiophosphoryloxy-essigsäure-N-methylanilid der Formel

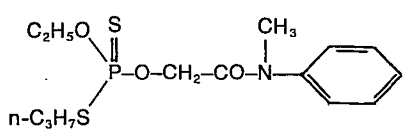

(I),

ein Verfahren zu seiner Herstellung und seine Verwendung als Herbizid.

Der Wirkstoff eignet sich vorzugsweise zur selektiven Unkrautbekämpfung in verschiedenen Nutzkulturen, wie z. B. Weizen, Soja, Rüben und Mais. Insbesondere gelingt die Bekämpfung von Labkraut-Arten (Galium sp.).

EP 0 012 172 A1

0012172



BAYER AKTIENGESELLSCHAFT
Zentralbereich
Patente, Marken und Lizenzen

5090 Leverkusen, Bayerwerk
Bi-Th
I a

# O-Äthyl-S-n-propyl-dithiophosphoryloxy-essigsäure-N-methylanilid, Verfahren zu seiner Herstellung sowie seine Verwendung als Herbizid

Die Erfindung betrifft das neue O-Äthyl-S-n-propyl-dithiophosphoryloxy-essigsäure-N-methylanilid, ein Verfahren zu dessen Herstellung und seine Verwendung als Herbizid.

Es ist bekannt, daß bestimmte Phosphoryloxy-essigsäureamide, wie z.B. O-n-Butyl-S-methyl-thiophosphoryloxyessigsäure-N-methylanilid, herbizide Eigenschaften aufweisen (vergleiche DE-OS 2 647 568).

Die Wirkung der bekannten Verbindungen ist jedoch nicht ganz zufriedenstellend; insbesondere gegen Labkraut-Arten (Galium sp.) ist bei niedrigen Wirkstoffkonzentrationen und Aufwandmengen keine befriedigende Wirkung zu erzielen.

Es wurde nun das neue O-Äthyl-S-n-propyl-dithiophosphoryloxy-essigsäure-N-methylanilid der Formel

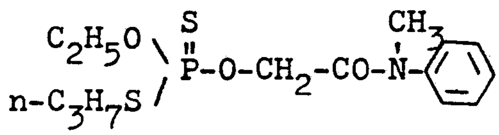

(I)

aufgefunden.

Man erhält die neue Verbindung der Formel (I), wenn man O-Äthyl-S-n-propyl-dithiophosphorsäurechlorid der Formel

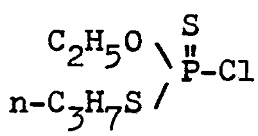

(II)

mit Hydroxyessigsäure-N-methylanilid der Formel

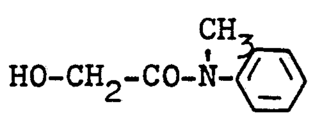

(III)

gegebenenfalls in Gegenwart eines Säureakzeptors und gegebenenfalls in Gegenwart von Verdünnungsmitteln umsetzt.

Das neue O-Äthyl-S-n-propyl-dithiophosphoryloxy-essigsäure-N-methylanilid zeichnet sich durch hohe herbizide Wirksamkeit aus.

Überraschenderweise zeigt die neue Verbindung (I) eine wesentlich stärkere Wirkung gegen Labkraut-Arten

(Galium sp.) und ist gegenüber Nutzpflanzen wie z.B. Weizen, Soya, Rüben und Mais besser verträglich als andere aus dem Stand der Technik bekannte Verbindungen analoger Konstitution und gleicher Wirkungsrichtung.

Die bei der Herstellung der neuen Verbindung (I) ablaufende Reaktion kann durch folgendes Formelschema skizziert werden:

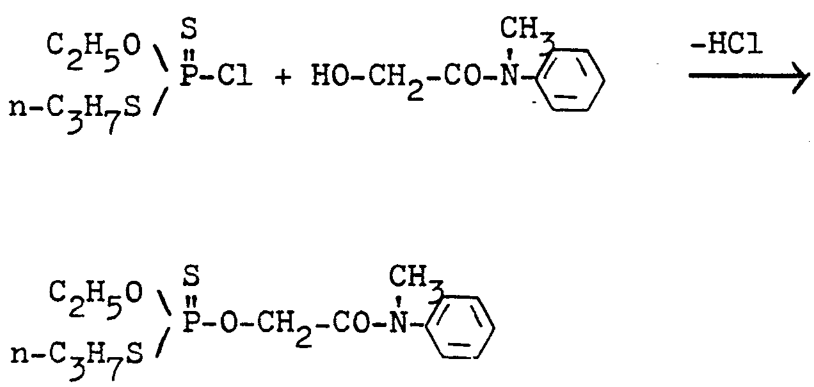


Das als Ausgangsstoff zu verwendende O-Äthyl-S-n-propyl-dithiophosphorsäurechlorid (II) ist bekannt (vergleiche DE-AS 2 642 982).
Ebenso ist das als weitere Ausgangsverbindung einzusetzende Hydroxyessigsäure-N-methylanilid (III) bekannt (vergleiche DE-OS 2 647 568).

Das Verfahren zur Herstellung des erfindungsgemäßen O-Äthyl-S-n-propyl-dithiophosphoryloxy-N-methylanilids

wird bevorzugt unter Verwendung geeigneter Lösungs- oder Verdünnungsmittel durchgeführt. Als solche kommen praktisch alle inerten organischen Solventien infrage. Hierzu gehören insbesondere aliphatische und aromatische, gegebenenfalls chlorierte Kohlenwasserstoffe, wie Benzin, Benzol, Toluol, Xylol, Methylenchlorid, Chloroform, Tetrachlorkohlenstoff, Chlorbenzol und o-Dichlorbenzol, Äther wie Diäthyl- und Dibutyläther, Tetrahydrofuran und Dioxan, Ketone wie Aceton, Methyläthyl-,Methylisopropyl- und Methylisobutylketon, Nitrile wie Acetonitril und Propionitril, Alkohole wie Methanol, Äthanol, n- und iso-Propanol sowie gegebenenfalls Wasser als weitere Lösungsmittelkomponente.

Als Säureakzeptoren können alle üblichen Säurebindemittel Verwendung finden. Besonders bewährt haben sich Alkalihydroxide, -carbonate und -alkoholate, wie Natrium- und Kaliumhydroxid, Natrium- und Kaliumcarbonat, Natrium- und Kaliummethylat bzw. -äthylat, ferner aliphatische, aromatische oder heterocyclische Amine, beispielsweise Triäthylamin, Trimethylamin, Dimethylanilin, Dimethylbenzylamin und Pyridin.

Die Reaktionstemperatur kann innerhalb eines größeren Bereichs variiert werden. Im allgemeinen arbeitet man zwischen -1o und +1oo°C, vorzugsweise bei 0 bis 8o°C. Das erfindungsgemäße Verfahren wird im allgemeinen bei Normaldruck durchgeführt.

Zur Durchführung des erfindungsgemäßen Verfahrens werden die Ausgangsstoffe gewöhnlich in äquimolaren Mengen

eingesetzt. Ein Überschuß der einen oder anderen Reaktionskomponente bringt keine wesentlichen Vorteile. Die Umsetzung wird im allgemeinen in einem geeigneten Verdünnungsmittel in Gegenwart eines Säureakzeptors durchgeführt und das Reaktionsgemisch wird mehrere Stunden bei der erforderlichen Temperatur gerührt. Danach gießt man das Reaktionsgemisch in Wasser, extrahiert mit einem mit Wasser nicht mischbaren Lösungsmittel wie z.B. Toluol, wäscht mit verdünnter Natronlauge und dann mit Wasser, trocknet die organische Phase und filtriert. Das nach Abdestillieren des Lösungsmittels im Vakuum zurückbleibende ölige Produkt kann nicht unzersetzt destilliert werden, jedoch kann es durch sogenanntes "Andestillieren", d h. durch längeres Erhitzen unter vermindertem Druck auf mäßig erhöhte Temperaturen von den letzten flüchtigen Anteilen befreit und auf diese Weise gereinigt werden. Zur Charakterisierung dient der Brechungsindex.

Der erfindungsgemäße Wirkstoff beeinflußt das Pflanzenwachstum und kann deshalb als Defoliant, Desiccant, Krautabtötungsmittel, Keimhemmungsmittel und insbesondere als Unkrautvernichtungsmittel verwendet werden. Unter Unkraut im weitesten Sinne sind alle Pflanzen zu verstehen, die an Orten aufwachsen, wo sie unerwünscht sind. Ob der erfindungsgemäße Stoff als totales oder selektives Herbizid wirkt, hängt im wesentlichen von der angewendeten Menge ab.

Der erfindungsgemäße Wirkstoff kann z.B. bei den folgenden Pflanzen verwendet werden:

Dikotyle Unkräuter der Gattungen: Sinapis, Lepidium, Galium, Stellaria, Matricaria, Anthemis, Galinsoga, Chenopodium, Urtica, Senecio, Amaranthus, Portulaca, Xanthium, Convolvulus, Ipomoea, Polygonum, Sesbania, Ambrosia, Cirsium, Carduus, Sonchus, Solanum, Rorippa, Rotala, Lindernia, Lamium, Veronica, Abutilon, Emex, Datura, Viola, Galeopsis, Papaver, Centaurea.

Dicotyle Kulturen der Gattungen: Gossypium, Glycine, Beta, Daucus, Phaseolus, Pisum, Solanum, Linum, Ipomoea, Vicia, Nicotiana, Lycopersicon, Arachis, Brassica, Lactuca, Cucumis, Cuburbita.

Monokotyle Unkräuter der Gattungen: Echinochloa, Setaria, Panicum, Digitaria, Phleum, Poa, Festuca, Eleusine, Brachiaria, Lolium, Bromus, Avena, Cyperus, Sorghum, Agropyron, Cynodon, Monocharia, Fimbristylis, Sagittaria, Eleocharis, Scirpus, Paspalum, Ischaemum, Spenoclea, Dactyloctenium, Agrostis, Alopecurus, Apera.

Monokotyle Kulturen der Gattungen: Oryza, Zea, Triticum, Hordeum, Avena, Secale, Sorghum, Panicum, Saccharum, Ananas, Asparagus, Allium.

Die Verwendung des erfindungsgemäßen Wirkstoffs ist jedoch keineswegs auf diese Gattungen beschränkt, sondern erstreckt sich in gleicher Weise auch auf andere Pflanzen.

Die Verbindung eignet sich in Abhängigkeit von der Konzentration zur Totalunkrautbekämpfung z.B. auf Industrie- und Gleisanlagen und auf Wegen und Plätzen mit und ohne Baumbewuchs. Ebenso kann die Verbindung zur Unkrautbekämpfung in Dauerkulturen z.B. Forst-, Ziergehölz-, Obst-, Wein-, Citrus-, Nuss-, Bananen-, Kaffee-, Tee-, Gummi-, Ölpalm-, Kakao-, Beerenfrucht- und Hopfenanlagen und zur selektiven Unkrautbekämpfung in einjährigen Kulturen eingesetzt werden.

Der erfindungsgemäße Wirkstoff kann vorzugsweise zur selektiven Unkrautbekämpfung in verschiedenen Nutzkulturen, wie beispielsweise Weizen, Soja, Rüben und Mais eingesetzt werden. Er eignet sich dabei besonders zur Bekämpfung von Labkraut-Arten (Galium sp.).

Der Wirkstoff kann in die üblichen Formulierungen übergeführt werden, wie Lösungen, Emulsionen, Spritzpulver, Suspensionen, Pulver,Stäubemittel, Pasten, lösliche Pulver, Granulate, Suspensions-Emulsionskonzentrate, Wirkstoff-imprägnierte Natur- und synthetische Stoffe, Feinverkapselungen in polymeren Stoffen.

Diese Formulierungen werden in bekannter Weise hergestellt, z.B. durch Vermischen des Wirkstoffs mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten oder chlorierte aliphatische Kohlenwasserstoffe, wie Chlorbenzol, Chloräthylene oder Methylenchlorid, aliphatische Kohlenwasserstoffe, wie Cyclohexan oder Paraffine, z.B. Erdölfraktionen, Alkohole, wie Butanol oder Glycol sowie deren Äther und Ester, Ketone, wie Aceton, Methyläthylketon, Methylisobutylketon oder Cyclohexanon, stark polare Lösungsmittel, wie Dimethylformamid und Dimethylsulfoxid, sowie Wasser.

Als feste Trägerstoffe kommen in Frage:
z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel; als Emulgier- und/oder schaumerzeugende Mittel kommen in Frage: z.B. nichtionogene und anionische Emulgatoren, wie Polyoxyäthylen-Fettsäure-Ester, Polyoxyäthylen-Fettalkohol-Äther, z.B. Alkylarylpolyglykol-äther, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat.

Es können Farbstoffe wie anorganische Pigmente, z.B. Eisenoxid, Titanoxid, Ferrocyanblau und organische Farbstoffe, wie Alizarin-, Azol-Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Der erfindungsgemäße Wirkstoff kann als solcher oder in seinen Formulierungen zur Verstärkung und Ergänzung seines Wirkungsspektrums je nach beabsichtigter Verwendung mit anderen herbiziden Wirkstoffen kombiniert werden, wobei Fertigformulierung oder Tankmischung möglich ist. Auch eine Mischung mit anderen bekannten Wirkstoffen, wie Fungiziden, Insektiziden, Akariziden, Nematiziden, Schutzstoffen gegen Vogelfraß, Wuchsstoffen, Pflanzennährstoffen und Bodenstrukturverbesserungsmitteln ist möglich.

Der Wirkstoff kann als solcher, in Form seiner Formulierungen oder den daraus bereiteten Anwendungsformen, wie gebrauchsfertige Lösungen, Emulsionen, Suspensionen,

Pulver, Pasten und Granulate angewendet werden. Die Anwendung geschieht in üblicher Weise, z.B. durch Spritzen, Sprühen, Stäuben, Streuen und Gießen.

Der erfindungsgemäße Wirkstoff kann sowohl vor als auch nach dem Auflaufen der Pflanzen appliziert werden. Die Anwendung wird vorzugsweise vor dem Auflaufen der Pflanzen, also im pre-emergence-Verfahren, vorgenommen. Er kann auch vor der Saat in den Boden eingearbeitet werden.

Die aufgewandte Wirkstoffmenge kann in größeren Bereichen schwanken. Sie hängt im wesentlichen von der Art des gewünschten Effektes ab. Im allgemeinen liegt die Aufwandmenge zwischen 0,1 und 10 kg Wirkstoff pro ha. vorzugsweise zwischen 0,1 und 5 kg/ha.

Der erfindungsgemäße Wirkstoff besitzt nicht nur herbizide Eigenschaften, sondern darüber hinaus auch eine insektizide Wirksamkeit; so kann er z.B. gegen Hygiene- und Vorratsschädlinge eingesetzt werden.

Die guten herbiziden Wirkungen des erfindungsgemäßen Wirkstoffs (I) und seine selektiven Einsatzmöglichkeiten gehen aus den nachfolgenden Beispielen hervor. Hierbei wurde die nachstehend angegebene Verbindung als Vergleichsmittel (A) eingesetzt:

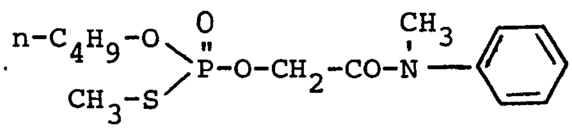 = (A)

(O-n-Butyl-S-methyl-thiophosphoryloxyessigsäure-N-methylanilid).

Beispiel A 

Pre-emergence-Test

Lösungsmittel: 5 Gewichtsteile Aceton
Emulgator: 1 Gewichtsteil Alkylarylpolyglycoläther

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Samen der Testpflanzen werden in normalen Boden ausgesät und nach 24 Stunden mit der Wirkstoffzubereitung begossen. Dabei hält man die Wassermenge pro Flächeneinheit zweckmäßigerweise konstant. Die Wirkstoffkonzentration in der Zubereitung spielt keine Rolle, entscheidend ist nur die Aufwandmenge des Wirkstoffs pro Flächeneinheit. Nach drei Wochen wird der Schädigungsgrad der Pflanzen bonitiert in % Schädigung im Vergleich zur Entwicklung der unbehandelten Kontrolle. Es bedeuten:

0 % = keine Wirkung (wie unbehandelte Kontrolle)
100 % = totale Vernichtung

Wirkstoffe, Aufwandmengen und Resultate gehen aus der nachfolgenden Tabelle hervor:

Tabelle A

Pre-emergence-Test

| Wirkstoff | Wirkstoff-aufwand Kg / ha | Weizen | Soja | Rüben | Ama-ran-thus | Galium | Portulaca |
|---|---|---|---|---|---|---|---|
| (A) | 5,0 | 60 | 20 | 20 | 100 | 20 | 90 |
| | 2,5 | 40 | 0 | 10 | 80 | 0 | 90 |
| (bekannt) | | | | | | | |
| (I) | 5,0 | 0 | 10 | 0 | 100 | 70 | 100 |
| | 2,5 | 0 | 0 | 0 | 90 | 50 | 100 |

Herstellungsbeispiel

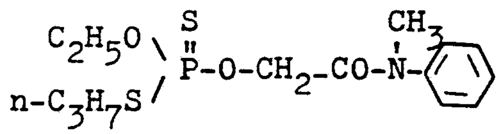

3,3 g (o,o6 Mol) Kaliumhydroxid werden in loo ml iso-Propanol vorgelegt und bei einer Innentemperatur zwischen 0 und $5^{o}C$ mit 8,2 g (o,o5 Mol) Hydroxyessigsäure-N-methylanilid und 11,9 g (o,o5 Mol) O-Äthyl-S-n-propyl-dithiophosphorsäurechlorid (91,4 %ig) versetzt. Das Reaktionsgemisch wird 3o Minuten bei $5^{o}C$ und 2 Stunden bei Raumtemperatur gerührt; dann wird es in 25o ml Wasser gegossen und zweimal mit je 15o ml Toluol extrahiert. Die organische Phase wird zweimal mit je 5 ml 2n Natronlauge und dann mit Wasser neutral gewaschen, über Natriumsulfat getrocknet, filtriert, bei $4o^{o}C$ Badtemperatur eingeengt und 3o Minuten am Dampfstrahler bei $4o^{o}C$ andestilliert. Man erhält als Rückstand 16 g (92,4 % der Theorie) O-Äthyl-S-n-propyl-dithiophosphoryloxy-essigsäure-N-methylanilid als blaßgelbes Öl mit dem Brechungsindex $n_D^{26}$: 1,5495.

Patentansprüche

1. O-Äthyl-S-n-propyl-dithiophosphoryloxy-essigsäure-N-methylanilid der Formel

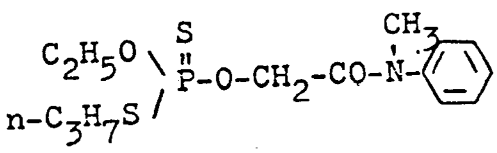

(I)

2. Verfahren zur Herstellung von O-Äthyl-S-n-propyl-dithiophosphoryloxy-essigsäure-N-methylanilid der Formel (I), dadurch gekennzeichnet, daß man O-Äthyl-S-n-propyl-dithiophosphorsäurechlorid der Formel

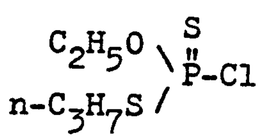

(II)

mit Hydroxyessigsäure-N-methylanilid der Formel

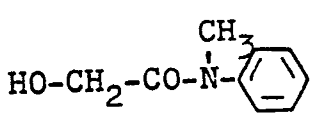

(III)

gegebenenfalls in Gegenwart eines Säureakzeptors und gegebenenfalls in Gegenwart von Verdünnungsmitteln umsetzt.

3. Herbizide Mittel, gekennzeichnet durch einen Gehalt an O-Äthyl-S-n-propyl-dithiophosphoryloxy-essigsäure-N-methylanilid der Formel (I).

4. Verfahren zur Bekämpfung von unerwünschtem Pflanzenwachstum, dadurch gekennzeichnet, daß man O-Äthyl-S-n-propyl-dithiophosphoryloxy-essigsäure-N-Methylanilid der Formel (I) auf die unerwünschten Pflanzen oder ihren Lebensraum einwirken läßt.

5. Verwendung von O-Äthyl-S-n-propyl-dithiophosphoryloxy-essigsäure-N-Methylanilid der Formel (I) zur Bekämpfung von Pflanzenwachstum.

6. Verfahren zur Herstellung von herbiziden Mitteln, dadurch gekennzeichnet, daß man O-Äthyl-S-n-propyl-dithiophosphoryloxy-essigsäure-N-Methylanilid der Formel (I) mit Streckmitteln und/oder oberflächenaktiven Mitteln vermischt.

Europäisches Patentamt

# EUROPÄISCHER RECHERCHENBERICHT

0012172

Nummer der Anmeldung

EP 79 103 918.3

| EINSCHLÄGIGE DOKUMENTE | | | KLASSIFIKATION DER ANMELDUNG (Int.Cl.3) |
|---|---|---|---|
| Kategorie | Kennzeichnung des Dokuments mit Angabe, soweit erforderlich, der maßgeblichen Teile | betrifft Anspruch | |
| X,D | DE - A1 - 2 647 568 (BAYER)<br>* Ansprüche 1 bis 6 *<br>-- | 1-6 | C 07 F 9/165<br>A 01 N 57/14 |
| A | DE - A1 - 2 655 823 (BAYER)<br>-- | | |
| A | DE - B2 - 2 638 804 (SUMITOMO)<br>-- | | RECHERCHIERTE SACHGEBIETE (Int. Cl.3) |
| A | DE - B2 - 2 542 193 (SUMITOMO)<br>-- | | A 01 N 57/14<br>C 07 F 9/165 |
| A | DE - B - 1 122 935 (SANDOZ)<br>---- | | |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 12-03-1980 | KAPTEYN |